Europäisches Patentamt

European Patent Office

Office européen des brevets

(19)

(11) Numéro de publication: **0 296 944**
**B1**

(12) ## FASCICULE DE BREVET EUROPEEN

(45) Date de publication du fascicule du brevet:
**19.09.90**

(51) Int. Cl.⁵: **F23G 7/06**

(21) Numéro de dépôt: **88401499.4**

(22) Date de dépôt: **16.06.88**

(54) Procédé de traitement d'effluents gazeux provenant de la fabrication de composants électroniques et appareil d'incinération pour sa mise en oeuvre.

(30) Priorité: **19.06.87 FR 8708667**

(43) Date de publication de la demande:
**28.12.88 Bulletin 88/52**

(45) Mention de la délivrance du brevet:
**19.09.90 Bulletin 90/38**

(84) Etats contractants désignés:
**BE CH DE ES FR GB IT LI NL SE**

(56) Documents cités:
**EP-A- 0 021 321**
**EP-A- 0 160 524**
**DE-A- 3 338 888**
**DE-B- 1 277 209**
**FR-A- 1 415 062**
**FR-A- 1 603 910**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07(FR)**

(72) Inventeur: **Rufin, Denis, 75, quai d'Orsay, F-75321 Paris Cédex 07(FR)**
Inventeur: **Hirase, Ikuo, 75, quai d'Orsay, F-75321 Paris Cédex 07(FR)**

(74) Mandataire: **Vesin, Jacques et al, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un procédé d'incinération d'effluents gazeux comportant notamment des hydrures inorganiques ainsi qu'un appareil pour le traitement de ces effluents.

Dans le domaine de la fabrication de circuits intégrés et de composants électroniques notamment par la technique du dépôt chimique en phase vapeur (CVD), il est essentiel, pour des raisons de protection contre la pollution et contre l'incendie de ne pas rejeter dans l'atmosphère les gaz utilisés et/ou générés par ces techniques. En effet, certains composés gazeux émis, présents dans les effluents gazeux sont toxiques pour l'homme et/ou combustibles au contact de l'air à température élevée ou combustibles spontanément et brûlés au contact de l'air ou de tout oxydant même à température ambiante.

Les effluents à traiter comportent non seulement les gaz de métallisation mais aussi les composés dérivés ou générés par les réactions de dépôt ou des réactions parasites, et encore les produits issus de réactions entre gaz et matériaux en contact (ex : huile de pompe).

Il peut s'agir d'hydrures métalliques, de composés métaux-carbonyles, et éventuellement des composés halogènés inorganiques, composés organiques ou gazeux et combustibles.

Ainsi, les effluents gazeux à traiter sont en particulier les hydrures inorganiques gazeux combustibles tels que les hydrures de silicium, notamment $SiH_4$, $Si_2H_6$, $Si_3H_8$, et les halogénosilanes du type $SiH_x Cl_{4-x}$, d'arsenic, notamment l'arsine $AsH_3$, de phosphore, notamment $PH_3$, de bore, notamment $B_2H_6$, de germanium, notamment $GeH_3$, et d'autres métaux, comme le molybdène, utilisés pour la fabrication des composants ou contenus dans le matériel de fabrication.

Parmi les métaux carbonyles, et les composés halogénés inorganiques, ou peut citer $W (CO)_6$, $Mo(CO)_6$ et les chlorures, fluorures et iodures de silicium, titane, tungstène, molybdène et tantale.

On peut citer en outre dans les rejets après les pompes, les organo-et/ou halogéno-silanes, les halogénures d'hydrogène, les gaz comportant de l'azote (dérivés des gaz de gravure) et les composés organiques provenant en particulier des pompes.

Une méthode conventionnelle d'épuration des effluents gazeux pour éliminer leurs composants gazeux toxiques et/ou dangereux consiste à aspirer les effluents gazeux hors du système CVD au moyen d'une ou plusieurs pompes telles que les pompes à vide, et ensuite de faire passer ces effluents gazeux dans une ou plusieurs tours d'absorption ou colonnes où les effluents gazeux sont mis en contact avec un agent absorbant ou adsorbant, solide ou liquide. Toute ou partie des composants gazeux néfastes sont ainsi absorbés ou adsorbés et les effluents gazeux sont ensuite traités par bullage ou un autre traitement d'absorption selon la nature des composants résiduels à éliminer.

Cependant, selon cette méthode conventionnelle, les agents absorbants employés peuvent être rapidement contaminés et/ou épuisés, si bien que de fréquentes remplacements de l'agent absorbant sont nécessaires pour garantir un degré d'efficacité raisonnable de l'épuration. De plus, les agents absorbants employés pour cet usage sont souvent chers et non régénerables, et les remplacements nécessaires sont difficilement compatibles avec des procédés industriels en continu.

Une autre méthode consistant à brûler les effluents à leur sortie du système est dangereuse dans la mesure où elle est difficilement acceptable avec un niveau fluctuant d'émission des effluents combustibles: à l'arrêt de l'émission, la combustion s'arrête et la reprise de l'émission, si la combustion n'est pas entretenue, provoque une accumulation de gaz inflammable et un risque d'explosion capable de se propager jusque dans le système CVD.

Même si l'on veille à entretenir la combustion, celle-ci réalisée directement à la sortie du système à l'air ou avec un gaz comburant quelconque, présente des dangers certains de retour de flamme ou simplement d'introduction d'oxydant en amont du brûleur lors des baisses de pressions d'émission, et donc des risques d'explosion.

De telles méthodes sont par example décrites dans EP-A 160 524 ou DE-A 3 338 888.

La présente invention concerne un procédé de traitement des effluents gazeux défnis ci-dessus caractérisé en ce que les gaz effluents sont aspirés par un gaz vecteur inerte, puis intimement mélangés à un gaz oxydant préchauffé puis restent à son contact à une température et pendant une durée suffisante pour l'incinération, puis les produits d'oxydation sont refroidis par échange thermique jusqu'à condensation, et les produits d'oxydation solides sont recueillis et les gaz résiduels lavés, et en ce que l'on réalise une cascade de perte de charge le long du courant gazeux.

Les composés ayant subit l'incinération selon l'invention c'est à dire ayant séjourné un temps suffisament long, selon la température, pour être oxydés dans la chambre d'incinération sont ensuite refroidis dans un échangeur à parois froides et se condensent sous forme d'oxydes.

Les oxydes de silicium (silice) et de métaux principalement sont sous la forme de particules solides et l'on peut les séparer des gaz résiduels par tout moyen de séparation mécanique, par exemple filtration et/ou centrifugation.

Les gaz résiduels sont lavés dans une solution alcaline de préférence pour piéger les acides et sont ensuites rejetés à l'atmosphère.

Un premier avantage du procédé selon l'invention est de rendre le piegeage des éléments indésirable plus sûr et facile car ces éléments sont oxydés et sous forme solide.

La caractéristique de l'invention selon laquelle on réalise une cascade de pertes de charge le long du

EP 0 296 944 B1

courant gazeux présente l'avantage d'éliminer les risques d'explosion par retour de flamme ou par contre-courant d'oxydant.

Ainsi, une première perte de charge est réalisée par un système éjecteur dans lequel un gaz inerte "pompe" ou "aspire" par effet Venturi les gaz effluents juste à leur sortie du système CVD. Ce système de pompage, par définition non mécanique, présente l'intérêt d'être non corrodable.

Le procédé met en oeuvre une incinération, il ne nécessite pas d'émission continue de gaz à traiter et peut donc supporter sans inconvénient des baisses ou des arrêts de l'émission.

La présente invention concerne également un appareil pour l'incinération d'un mélange d'effluents gazeux pouvant comporter des hydrures inorganiques, des composés halogènes inorganiques, des composés organiques, gazeux et combustibles, caractérisé en ce qu'il comporte au moins une chambre de préchauffe de gaz oxydant pourvue d'une arrivée de gaz oxydant, d'un brûleur, et d'une sortie de gaz oxydant chaud ; une chambre de mélange du gaz oxydant chaud et des effluents gazeux pourvu d'une arrivée de gaz oxydant chaud, d'une buse d'injection des effluents, de moyens pour induire le mélange, et d'une ouverture de sortie du mélange ; d'une chambre d'incinération munie d'une arrivée du mélange ; d'une zone de refroidissement et d'un collecteur de solide muni d'un échappement des effluents de l'incinération et en ce qu'il est pourvu de moyens pour créer des dépressions successives dans le sens d'écoulement des gaz.

Le présente invention sera mieux comprise à la  de la description détaillée ci-après et au vu des figures annexées sur lesquelles :
- la figure 1 est une représentation schématique d'une installation pour la mise en oeuvre du procédé ;
- la figure 2 est une coupe schématique d'un appareil d'incinération selon l'invention.

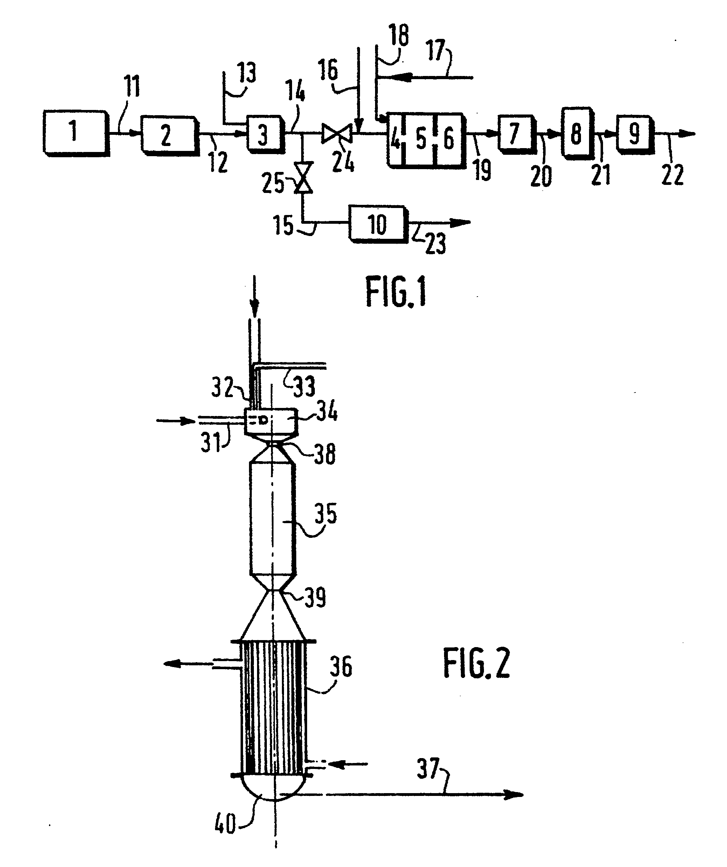

Sur la figure 1 apparaît le système CVD 1 dont les effluents, circulant par la canalisation 11, sont pompés par la pompe 2 et rejetés par la canalisation 12 vers un éjecteur 3. L'éjecteur 3 est alimenté par la canalisation 13 en gaz inerte, gaz vecteur moteur de l'éjecteur dont le courant entraîne les effluents du système CVD par un effet Venturi. Les effluents sont donc aspirés par effets Venturi, et dilués et entraînés par le même gaz vecteur inerte.

Les effluents dilués parviennent par la canalisation 14 à la chambre de prémélange 4 où le courant gazeux pénètre gainé par un gaz inerte délivré par la canalisation 16. Un gaz combustible brûlé dans le brûleur 17 chauffe le courant d'air parcourant la canalisation 18 avant que celui-ci ne pénètre dans la chambre de prémélange 4 où par un effet vortex, les gaz provenant des canalisations 14 et 18 sont intimement mélangés avant de parvenir à la chambre d'incinération 5. Le gaz oxydant utilisé est l'air, quoique de l'air dopé en oxygène ou un autre oxydant puisse être utilisé. Le temps de séjour est suffisant pour que les combustibles soient transformés en oxydes ; dans l'échangeur 6, les oxydes se condensent et sont recueillis à la sortie par la canalisation 19 dans un filtre 7 où les particules d'oxydes sont retenues. Les gaz résiduels passent par des tours de lavage en milieu humide ou des flacons laveurs 8 et sont entraînés hors de l'installation par un extracteur à hélice 9 avant d'être rejetés dans l'atmosphère par la canalisation 22.

Par mesure de sécurité, des vannes 24 et 25 sur la canalisation 14 et la canalisation 15 permettent de dériver le courant vers des cartouches 10 de milieu adsorbant ou absorbant qui assurent l'épuration en cas d'arrêt momentané de l'installation 4, 5, 6 d'incinération.

Sur la figure 2 apparaît un mode de réalisation d'un appareil pour l'incinération selon l'invention. La chambre cylindrique 34 de prémélange est munie d'une part d'une canalisation 31 d'arrivée de gaz oxydant préchauffé et d'autre part d'une canalisation 32 double flux reliée à une source de gaz inerte de gainage (non représentée) dont la canalisation interne 33 est reliée à l'arrivée des effluents dilués.

Le gainage réalisé empêche les gaz combustibles de s'oxyder dès leur injection, ce qui boucherait l'injecteur par les oxydes formés.

Cette canalisation 32-33 est parallèle à l'axe principal de la chambre 34 mais non confondu avec celui-ci. La canalisation 31 est perpendiculaire à l'axe de la chambre mais sa direction ne recontre pas cet axe. Cette disposition assure en mélange intime oxydant-effluents par effet Vortex. Un goulot d'étranglement 38 sépare la chambre 34 de la chambre d'incinération 35 dont le volume est supérieur à celui de la chambre 34. Un goulot d'étranglement 39 sépare la chambre 35 du refroidisseur à parois froides 36 refroidi à l'eau. Dans cet échangeur à parois froides, les particules submicroniques issues de la chambre d'incinération s'agglomèrent en refroidissant et atteignent une taille de quelques microns qui rend leur capture dans les filtres plus aisée. Le collecteur 40 est muni d'une canalisation 37 d'évacuation qui mène à des filtres à particules, laveur de gaz et extracteurs non représentés.

Exemple.

La Demanderesse a mis au point une installation telle que décrite ci-dessus et l'a appliquée à l'incinération en déchets issus de l'armoire chimique et/ou de la pompe principale d'un système CVD. Le gaz oxydant utilisé est l'air.

Dans l'éjecteur, le fluide moteur, $N_2$ a un débit de 2 à 3 $Nm^3/h$, et la pression est d'environ 1 bar. Le venturi crée à l'éjecteur permet d'aspirer les rejets du système CVD selon les caractéristiques suivantes :

| PERTE DE CHARGE (BAR) | −0,1 | 0 | +0,015 |
|---|---|---|---|
| DEBITS REJETS GAZEUX ASPIRES (Nm³/h) | | 0 | 0,5 | 1 |

Le gaz de gainage et le vortex crée dans la chambre de prémélange sont également destinés à empêcher des particules solides d'oxyde par exemple de se former et de séjourner dans cette chambre, ce qui évite les risques de bouchage.

Le brûleur produit une flamme air/propane qui porte l'air à préchauffer à une température de 1200°C, et au maximum 1400°C. Le brûleur développe une puissance thermique de 10 000 kcal/h.

Les débits des gaz de flamme sont de 0,2 à 0,3 Nm³/h pour le propane et 6Nm³/h pour l'air et ce qui permet de préchauffer 6 Nm³/h d'air injecté tangentiellement dans la chambre qui est à une température d'environ 1100°C, et au maximum 1200°C.

Dans la chambre de prémélange, 2 Nm³/h d'azote de gainage entrainent 1 à 5 Nl/mn d'effluents à traiter, avec un maximum de 50 Nl/mn.

Dans la chambre d'incinération, le temps de résistance est d'environ 5 secondes permettant aux oxydes de se former, ces oxydes sortant à une température d'environ 800°C.

L'échangeur thermique a des températures d'entrées et de sorties d'environ 600 et 110°C (maximum 800 et 180°C) et produisent une perte de charge de 5mm H₂O.

Comme filtre, on utilise des filtres en PTFE connu sous le nom de gortex, capable d'arrêter des particules de quelques fraction de micro-mètres. Ce matériaux résiste aux températures de fonctionnement (<180°C) et aux acides.

Les canalisations entre le refroidisseur et le ou les filtres, les filtres et les flacons laveurs sont maintenus à une température supérieure à 100°C, afin d'éviter la condensation de l'eau.

Le ou les flacons laveurs de gaz résiduels, destinés à piéger les acides en particulier, sont pourvus d'une lessive de soude à 3%.

L'extracteur qui assure, après les flacons laveurs, la depression avant l'évacuation des gaz résiduels à l'atmosphère a un débit de 2m³/mn et provoque une perte de charge de 500 mm H₂O.

Dasn toute l'installation, et particulièrement dans l'appareil pour l'incinération, l'étanchéité est assurée par des joints en cuivre ou en amiante.

Les parois et parties métalliques sont en acier inox du type 316 L ; le matériau isolant utilisé, en particulier dans les chambres du prémélange et de combustion sont en matériau réfractaire $Al_2O_3$-$SiO_2$.

Les gaz traités selon le procédé et dans un tel appareil atteignent des teneurs inférieures à leur concentration maximale admissible recommandées dans les locaux industriels. Ces concentrations permettent des expositions de 8 heures par jour pendant 5 jours par semaine sans effet détectable pour l'individu.

**Revendications**

1. Procédé de traitement en continu d'effluents gazeux pouvant comporter des hydrures inorganiques, des composés halogénés inorganiques, des composès organiques, gazeux et combustibles par oxydation, caractérisé en ce que les gaz effluents sont aspirés par un gaz vecteur inerte, puis intimement mélangés à un gaz oxydant préchauffé, puis restent à son contact à une température et pendant une durée suffisantes pour l'incinération, puis les produits oxydants sont refroidis par échange thermique jusqu'à condensation, et les produits d'oxydation solides sont receuillis et les gaz résiduels lavés, et en ce que l'on réalise une cascade de pertes de charge le long du courant gazeux.

2. Procédé selon la revendication 1, caractérisé en ce que le mélange effluents-oxydant est réalisé par un vortex gazeux.

3. Procédé selon la revendication 1 ou 2, caractérisé en ce que les effluents injectés sont gainés pour un gaz inerte.

4. Procédé selon l'une des revendications 1 à 3, caractérisé en ce que les effluents gazeux sont dilués et entraînés par un courant de gaz vecteur avant leur mélange à l'oxydant.

5. Appareil pour l'incinération d'un mélange d'effluents gazeux pouvant comporter des hydrures inorganiques, des composés halogénés inorganiques, des composés organiques, gazeux et combustibles, comportant des moyens d'injection desdits effluents gazeux dans des moyens de destruction desdits effluents gazeux qui engendrent un mélange de gaz et de particules solides, une zone de refroidissement du mélange de gaz et de particules solides, un collecteur desdites particules solides muni d'un échappement du mélange gazeux, caractérisé en ce qu'il comporte en outre, au moins une chambre de préchauffe de gaz oxydant pourvue d'une arrivée de gaz oxydant, d'un brûleur et d'une sortie de gaz oxydant chaud, des moyens d'injection d'un gaz inerte de gainage des effluents gazeux, une chambre (34) de mélange de gaz oxydant chaud et des effluents gazeux pourvu d'une arrivée de gaz oxydant chaud (31), d'une buse d'injection des effluents (33), de moyens pour induire le mélange et d'une ouverture de sortie du mélange (38), en ce que les moyens de destruction desdits effluents gazeux sont constitués par une chambre d'incinération (35) munie d'une arrivée du mélange, d'une zone de refroidissement (36) des produits de l'incinération et d'un collecteur de solide (40) muni d'un échappement (37) des effluents de l'incinération et en ce qu'il est pourvu de moyens pour créer des dépressions successives dans le sens d'écoulement des gaz.

6. Appareil selon la revendication 5, caractérisé en ce que la chambre de prémélange (34) est pourvue de moyens pour créer un vortex gazeux.

7. Appareil selon la revendication 5 ou 6, caractérisé en ce que la chambre de prémélange est cylindrique, la canalisation (31) d'arrivée de gaz oxydant chaud est sensiblement perpendiculaire à la buse d'injection (33) des effluents gazeux, la direction d'injection par la buse (33) étant parallèle à l'axe de la chambre et non confondue avec celui-ci et la direction de ladite canalisation ne rencontrant pas l'axe de la chambre.

8. Appareil selon l'une des revendications 5 à 7, caractérisé en ce que la buse d'injection et une buse double flux coaxial (32, 33).

9. Appareil selon l'une des revendications 5 à 8, caractérisé en ce que la zone de refroidissement (36) est une échangeur à parois froides.

10. Appareil selon l'une des revendications 5 à 9, caractérisé en ce que les moyens pour créer des dépressions sont des étranglements (38, 39), notamment entre la chambre de prémélange et la chambre d'incinération et la dite chambre d'incinération et la zone de refroidissement.

## Claims

1. A method for continuous processing by oxidation of gaseous effluents which may contain gaseous and combustible inorganic hydrides, inorganic halogen compounds and organic compounds, characterised in that the effluent gases are drawn in with an inert carrier gas, then mixed intimately with a preheated oxidising gas, then remain in contact therewith at a temperature and for a period sufficient for incineration, whereupon the oxidant products are cooled to condensation point by heat exchange and the solid oxidation products are collected and the residual gases scrubbed, and in that a cascade of pressure drops is established along the gaseous flow.

2. A method according to claim 1, characterised in that the effluents-oxidant mixture is produced by means of a gaseous vortex.

3. A method according to claim 1 or 2, characterised in that the effluents injected are shielded by an inert gas.

4. A method according to one of the claims 1 to 3, characterised in that the gaseous effluents are diluted and entrained by a flow of carrier gas before they are mixed with the oxidant.

5. An apparatus for incinerating a mixture of gaseous effluents which may contain gaseous and combustible inorganic hydrides, inorganic halogen compounds and organic compounds, comprising means for injecting the said gaseous effluents into means for destroying the said gaseous effluents which generate a mixture of gas and solid particles, a zone for cooling the gas mixture and solid particles, a collector for the said solid particles provided with an exhaust for the gaseous mixture, characterised in that it also comprises a preheating chamber for oxidant gas, provided with an oxidant gas inlet, a burner and an outlet for hot oxidant gas, means for injecting an inert shielding gas for the gaseous effluents, a chamber (34) for mixing hot oxidant gas with the gaseous effluents, provided with an inlet (31) for hot oxidant gas, a nozzle (33) for injecting the effluents, means for inducing mixing and an outlet opening (38) for the mixture, in that the means for destroying the said gaseous effluents are constituted by an incinerator chamber (35) provided with an inlet for the mixture, with a zone (36) for cooling the incineration products and with a solids collector (40) provided with an exhaust (37) for the incineration effluents and in that it is provided with means for engendering successive pressure drops in the direction of flow of the gases.

6. An apparatus according to claim 5, characterised in that the premixing chamber (34) is provided with means for generating a gaseous vortex.

7. An apparatus according to claim 5 or 6 characterised in that the premixing chamber is cylindrical, and the inlet pipe (31) for hot oxidant gas is substantially perpendicular to the nozzle (33) for injection of the gaseous effluents, the direction of injection through the nozzle (33) being parallel to the axis of the chamber and not coincident with the latter and the direction of the said pipe not intersecting the axis of the chamber.

8. An apparatus according to one of the claims 5 to 7, characterised in that the injection nozzle is a coaxial dual flow nozzle (32, 33).

9. An apparatus according to one of claims 5 to 8, characterised in that the cooling zone (36) is a cold-wall exchanger.

10. An apparatus according to one of the claims 5 to 9, characterised in that the means for engendering pressure drops are constrictions (38, 39), especially between the premixing chamber and the incineration chamber and the said incineration chamber and the cooling zone.

## Patentansprüche

1. Verfahren zur fortlaufenden Behandlung von gasförmigen Abgängen, die gasförmige und brennbare anorganische Hydride, anorganische halogenhaltige Verbindungen, organische Verbindungen enthalten können, durch Oxidation, dadurch gekennzeichnet, daß die ausströmenden Gase von einem inerten Traggas angesaugt werden, dann mit einem vorerhitzten oxidierenden Gase innig vermischt werden, dann mit diesem bei einer für die Verbrennung ausreichenden Temperatur und Dauer in Berührung bleiben, dann die oxidierenden Produkte durch Wärmeaustausch bis zur Kondensation abgekühlt und die festen Oxidationsprodukte aufgefangen und die Restgase gewaschen werden, und daß längs des Gasstroms eine Kaskade von Druckverlusten herbeigeführt wird.

2. Verfahren nach Anspruch 1, dadurch gekennzeichnet, daß das Vermischen von Abgängen und Oxidationsmittel mit Hilfe eines Hohlwirbels von Gas herbeigeführt wird.

3. Verfahren nach Anspruch 1 oder 2, dadurch gekennzeichnet, daß die eingespritzten Abgänge von einem Inertgas umhüllt werden.

4. Verfahren nach einem der Ansprüche 1 bis 3, dadurch gekennzeichnet, daß die gasförmigen Abgänge vor ihrem Vermischen mit dem Oxidationsmittel durch einen Traggasstrom verdünnt und mitgeführt werden.

5. Anlage zum Verbrennen eines Gemischs aus gasförmigen Abgängen, die gasförmige und brennbare anorganische Hydride, anorganische halogenhaltige Verbindungen, organische Verbindungen enthalten können, welche Anlage Mittel zum Einspritzen der genannten gasförmigen Abgänge in eine Einrichtung zur Zerstörung der genannten gasförmigen Abgänge aufweist, die ein Gemisch von Gas und festen Teilchen erzeugt, eine Zone zum Kühlen des Gemischs von Gas und festen Teilchen, ein mit einem Auslaß für das gasförmige Gemisch versehenes Sammelgefäß, dadurch gekennzeichnet, daß sie außerdem mindestens eine Vorerhitzungskammer für die Vorerhitzung von oxidierendem Gas mit einer Zuleitung für oxidierendes Gas, einem Brenner und einem Auslaß für heißes oxidierendes Gas aufweist, eine Einrichtung zum Einspritzen eines inerten Gases zum Umhüllen der gasförmigen Abgänge, eine Kammer (34) zum Vermischen von heißem oxidierendem Gas und gasförmigen Abgängen, versehen mit einer Zuleitung (31) für heißes oxidierendes Gas, einer Düse (33) zum Einspritzen der Abgänge, einer Einrichtung zum Einführen des Gemischs und einer Austrittsöffnung für das Gemisch (38), daß die Einrichtung zum Zerstören der genannten gasförmigen Abgänge aus einer mit einer Gemischzuleitung versehenen Verbrennungskammer (35), einer Zone (36) zum Kühlen der Verbrennungsprodukte und einem Sammelgefäß (40) für Feststoff mit einem Abzug (37) für die Verbrennungsabgänge besteht, und daß sie mit einer Einrichtung zum Erzeugen von aufeinanderfolgenden Unterdruckzuständen in Strömungsrichtung des Gases versehen ist.

6. Anlage nach Anspruch 5, dadurch gekennzeichnet, daß die Vormischkammer (34) mit einer Einrichtung zum Erzeugen eines Gas-Hohlwirbels versehen ist.

7. Anlage nach Anspruch 5 oder 6, dadurch gekennzeichnet, daß die Vormischkammer Zylinderform hat, daß die Zuleitung (31) für heißes oxidierendes Gas im wesentlichen senkrecht zu der Düse (33) zum Einspritzen der gasförmigen Abgänge steht, und daß die Richtung des Einspritzens durch die Düse (33) parallel zu der Achse der Kammer verläuft und mit jener nicht zusammenfällt und die Richtung der genannten Zuleitung die Achse der Kammer nicht schneidet.

8. Anlage nach einem der Ansprüche 5 bis 7, dadurch gekennzeichnet, daß die Einspritzdüse eine Düse für zweifachen koaxialen Fluß (32, 33) ist.

9. Anlage nach einem der Ansprüche 5 bis 8, dadurch gekennzeichnet, daß die Kühlzone (36) von einem Kaltwandwärmeaustauscher gebildet ist.

10. Anlage nach einem der Ansprüche 5 bis 9, dadurch gekennzeichnet, daß die Einrichtung zum Erzeugen von Unterdruckzuständen gebildet ist durch Querschnittsverminderungen (38, 39), insbesondere zwischen der Vormischkammer und der Verbrennungskammer und der genannten Verbrennungskammer und der Kühlzone.

FIG.1

FIG.2